# EUROPÄISCHE PATENTANMELDUNG

(11) **EP 2 228 232 A1**
(43) Veröffentlichungstag der Anmeldung: **15.09.2010**
(21) Anmeldenummer: 10163292.5
(22) Anmeldetag: 12.09.2008
(51) Int. Cl.: B42C 9/00, G01B 11/02, G01B 11/06

(54) **Verfahren zur Kontrolle von Buchblocks, Umschlägen und dergleichen bei der Herstellung von Druckerzeugnissen**

(30) Priorität: 15.10.2007 DE 102007049381
(62) Teilanmeldung aus: 08105321.7
(71) Anmelder: Heidelberger Druckmaschinen AG, 69115 Heidelberg (DE)
(72) Erfinder: Adler, Michael, 06808 Holzweißig (DE); Rösen, Heinz Dieter, 46487 Wesel (DE); Schäfer, Thomas, 04277 Leipzig (DE); Sommerer, Frank, 04288 Leipzig (DE)

(57) **Zusammenfassung**

Die Fräsung eines Buchblocks und die Rillung eines Buchdeckels oder Umschlages sind von entscheidender Bedeutung für die Qualität der Buchbindung.

Die Erfindung betrifft ein Verfahren zur Kontrolle eines Buchblocks oder eines Buchdeckels oder eines Umschlages über seine gesamte Oberfläche mittels Triangulation.

Die Messergebnisse der Einzelmessungen werden zu einem 3D-Lichtschnittprofil zusammengesetzt und nachfolgend in einer Auswerteeinrichtung durch Vergleich mit einem Soll-3D-Lichtschnittprofil ausgewertet.

## Beschreibung

Die Erfindung betrifft ein Verfahren zur Kontrolle von Buchblocks, Umschlägen und dergleichen bei der Herstellung von Druckerzeugnissen.

Bei der Herstellung von Druckerzeugnissen, insbesondere Büchern, unterscheidet man im Wesentlichen zwei Arten von Buchkonstruktionen, den Festeinband (Hardcover) und die Mehrlagenbroschur (Paperback).

Für den Festeinband werden zunächst Falzbogen und / oder Einzelblätter zu einem sogenannten Buchblock zusammengetragen. Der Rücken wird mit einer oder mehreren Klebstoffschichten bedeckt und anschließend mit einem Fälzelstreifen, der bis in die rückennahen Teile des Vor- und Nachsatzes reicht, versehen. Die aus mehreren Teilen bestehende Buchdecke wird anschließend um den Buchblock gelegt und fest und vollflächig an Vor- und Nachsatz mit dem Buchblock verbunden. Der Rücken bleibt frei. Je nach buchbinderischer Art wird dabei keine Rückenbearbeitung vorgenommen, z. B. wenn es sich um fadengeheftete Blocks, Fadensiegelung oder Perfobindung handelt.

Für die Mehrlagenbroschuren werden ebenfalls zunächst Falzbogen und / oder Einzelblätter zu einem Buchblock zusammengetragen. Der Buchblock wird anschließend am Rücken durch Fräsen bearbeitet, beleimt und dann mit einem Umschlag versehen. Dabei wird der Umschlag fest mit dem Blockrücken verklebt.

In der Buchbindeindustrie sind Klebebinder gebräuchlich, die all diese Arbeitsgänge ausführen können. Die möglichen Bindeverfahren und Produktvarianten sind dabei von der Maschinenausrüstung abhängig. Ein gebräuchlicher Klebebinder besteht im Wesentlichen aus den Funktionseinheiten: Buchblocktransportsystem, Rückenbearbeitung, Rückenbekleben, Zwischentrocknung, Seitenbekleben, Rückenverstärkung, Umschlag anlegen, Umschlag anpressen und trocknen. Eine derartige Buchbindemaschine ist aus der DE 20 2005 007 012 U1 bekannt.

Klebstoffauftragssysteme zum Auftragen von Klebstoff auf Bücher sind bekannt. Ein typisches Klebstoffauftragssytem umfasst wenigstens eine um eine Achse drehbare Walze, wobei wenigstens ein Teil ihres Umfangs in einem einen Leimvorrat enthaltenden Behälter angeordnet ist. Beim Abrollen der Walze nimmt diese an ihrer Außenfläche Leim auf. Die von einer Bindevorrichtung kommenden Bücher werden derart bewegt, dass sie mit dem auf der Außenfläche der rotierenden Walze befindlichen Leim in Berührung kommen. Wenn die Bücher mit dem Leim in Berührung kommen, wird der auf der Außenfläche der rotierenden Walze befindliche Leim von dieser auf die sich bewegenden Bücher übertragen. Ein solches System ist zum Beispiel aus der US 2,605,739 bekannt.

Besonders kritisch beim Auftragen von Klebstoff ist es, die richtige Menge des Klebstoffs auf einen Buchrücken aufzubringen, um eine befriedigende Bindequalität zu erreichen. Dabei ist nicht nur die Klebstoffdicke ausschlaggebend, sondern auch die Länge und Gleichmäßigkeit der Klebstoffspur auf dem Buchrücken, insbesondere wo der Klebstoff auf dem Buchrücken ansetzt und wo der Klebstoff wieder auf dem Buchrücken absetzt. Weiterhin ist es wichtig, dass die Buchblocks und auch die Umschläge eine gute Fräsung und Rillung aufweisen.

Aus der DE 195 32 767 A1 ist es bekannt, ein Oberflächenprofil eines Objektes mittels Triangulationsverfahren zu bestimmen. Eine Fehlstellenbestimmung und -analyse ist mit diesem Verfahren nicht möglich.

Aufgabe der vorliegenden Erfindung ist es deshalb, ein Verfahren zu schaffen, mit der die Fräsungen von Buchblocks und die Rillungen von Umschlägen mit hoher Genauigkeit kontrolliert werden können.

Gelöst wird die Aufgabe durch ein Verfahren mit folgenden Verfahrensschritten:
a) Transport des Produktes zu einer Vorrichtung zur Kontrolle der Oberfläche
b) Aussenden eines Lichtstrahls durch eine Beleuchtungseinheit
c) Betrachtung des Strahls auf der Oberfläche durch eine Hochgeschwindigkeitskamera und Winkelvermessung mit trigonometrischer Berechnung
d) inkrementeller Weitertransport des Produktes
e) Wiederholen der Schritte b), c) und d) bis die gesamte Oberfläche des Produktes vermessen ist
f) Drehung des Produktes zur Kontrolle der gegenüberliegenden Oberfläche und wiederholen der Schritte b) bis e)
g) Zusammensetzung der Messergebnisse der Einzelmessungen zu einem 3D-Lichtschnittprofil mit nachfolgender Auswertung mit einer Auswerteeinrichtung.

In einem weiteren vorteilhaften Verfahrensschritt wird das Produkt ausgeschleust oder markiert, wenn das 3D-Lichtschnittprofil nicht den in der Auswerteeinheit hinterlegten Vorgaben entspricht.

Hinsichtlich weiterer vorteilhafter Ausgestaltungen der Erfindung wird auf die Unteransprüche sowie die Beschreibung eines Ausführungsbeispiels unter Bezugnahme auf die beiliegenden Zeichnungen verwiesen.

Die Erfindung soll anhand eines Ausführungsbeispiels noch näher erläutert werden. Es zeigen in schematischer Darstellung:
Fig. 1 eine Vorrichtung zur Kontrolle einer Klebstoffschichtdicke auf einem Buchblock in einer Seitenansicht
Fig. 2 den Einsatz der in der Figur1 gezeigten Vorrichtung in einem Klebebinder

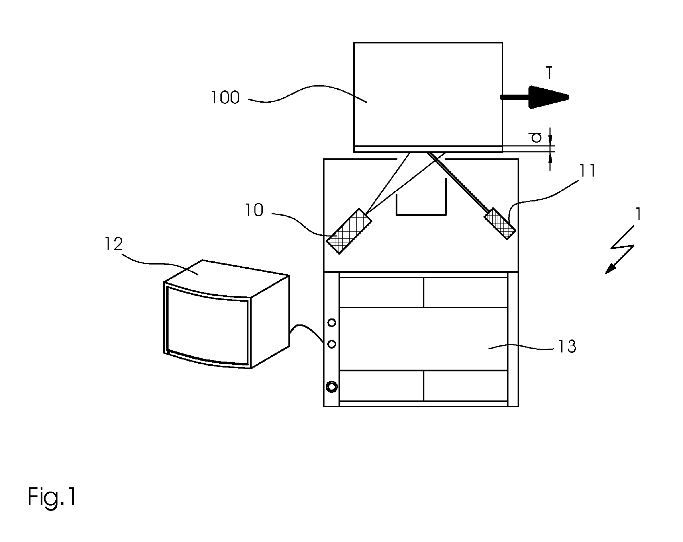

Fig. 1 zeigt eine Vorrichtung 1 zur Kontrolle der Klebstoffschichtdicke d mittels Triangulation und einen mit einer Klebstoffschicht versehenen Buchblock 100. Der Buchblock 100 wird in Transportrichtung T über den Messbereich der Vorrichtung zur Kontrolle der Klebstoffschichtdicke d hinwegbewegt. Die Vorrichtung 1 zur Kontrolle der Klebstoffschichtdicke d besteht aus einer Beleuchtungseinheit 11, einer Kamera mit Objektiv 10, einer Auswerteeinrichtung 13 und einer Anzeigeeinheit 12. Die

Beleuchtungseinheit 10, beispielsweise ein Laser projiziert auf die Klebstoffschicht des Buchblocks 10 einen Lichtpunkt, der mit einer CCD- oder CMOS-Kamera 10 beobachtet wird. Ändert sich nun der Abstand zwischen Sensor und Klebstoffschichtoberfläche, ändert sich dadurch auch der Winkel, unter dem die Kamera 10 den Lichtfleck aufnimmt. Die Verbindung Kamera 10 - Lichtquelle 11 sowie die beiden Strahlen von und zum Objekt bilden hierbei ein Dreieck, daher die Bezeichnung Triangulation. Bei Kenntnis der Strahlrichtung und des Abstandes zwischen Kamera 10 und Lichtquelle 11 kann damit der Abstand von Klebstoffschichten zur Kamera bestimmt werden. Durch einfache trigonometrische Berechnung kann damit die Abstandsänderung sehr genau bestimmt werden. Die mögliche Auflösung geht dabei bis hinunter in den Submikrometerbereich. Verwendet man anstelle eines einzelnen Lichtpunkts eine Linie aus unendlich vielen Punkten, so kann das Verfahren auf zwei Dimensionen (2D) ausgedehnt werden. Aus dem Abbild der Laserlinie auf der Oberfläche, das durch die Kamera aufgenommen wird, kann dann ein Höhenprofil entlang der Laserlinie berechnet werden. Der Buchblock 100 wird unter der Vorrichtung 1 in Transportrichtung T weitertransportiert. Die dadurch anstehende Verschiebung der Linie im Kamerabild wird mit den Methoden der Fotogrammmetrie in 3D-Koordinaten umgerechnet. Hierdurch entsteht ein exaktes 3D-Lichtschnittprofil der Klebstoffschicht, welche in der Auswerteeinheit 12 mit einem hinterlegten 3D-Sollprofil verglichen werden kann. Das Ergebnis dieser Auswertung kann auf einer Anzeigeeinheit 12 dargestellt werden.

Entsprechend kann auch die Klebstoffschicht eines Buchumschlages 101 kontrolliert werden.

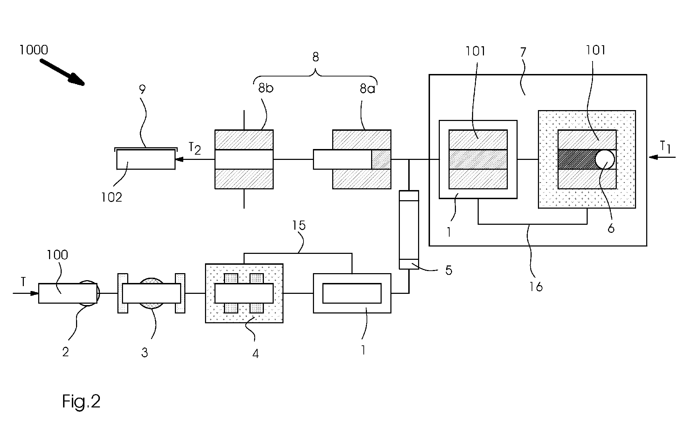

Fig. 2 zeigt einen Klebebinder 1000 in einer schematischen Darstellung. Ein Buchblock 100 wird dem Klebebinder 1000 in Transportrichtung T zugeführt, in einer ersten Rückenbearbeitungsstation 2 und mindestens einer zweiten Rückenbearbeitungsstation 3 bearbeitet. Der Buchblockrücken des Buchblocks 100 wird in einer Klebstoffauftragsstation 4 mit einer Klebstoffschicht versehen und die einzelnen Bogen des Buchblocks miteinander verbunden. In einer erfindungsgemäßen Vorrichtung zur Kontrolle der Klebstoffschichtdicke d kann nachfolgend die Klebstoffschicht kontrolliert werden. Die Vorrichtung zur Kontrolle der Klebstoffschichtdicke d und die Klebstoffauftragsstation 4 sind über eine Datenleitung 15 miteinander verbunden. Dies ermöglicht es, dass die Einstellungen des Klebstoffauftragssystems 4 basierend auf den Messergebnissen der Vorrichtung 1 korrigiert werden. Im Anschluss an die Vorrichtung 1 kann sich eine nicht dargestellte Ausschleusweiche zum Ausschleusen eines fehlerhaft beklebten Buchblocks befinden. Daran schließt sich eine optionale Warmhaltestrecke 5 an. Aus dem Magazin eines nicht näher dargestellten Umschlaganlegers wird ein Umschlag 101 in Transportrichtung T₁ einer Umschlagzuführung 7 zugeführt und dort durch ein Klebstoffauftragssystem 6, bspw. einer Düse, mit Klebstoff versehen. Anschließend wird die Klebstoffschichtdicke auf dem Umschlag 101 mittels einer Vorrichtung 1 kontrolliert. Das Klebstoffauftragssystem 6 und die Vorrichtung 1 sind mittels Datenleitung 16 miteinander verbunden. Dadurch können die Einstellungen des Klebstoffauftragssystems 6 basierend auf den Messergebnissen der Vorrichtung 1 geregelt werden. Anschließend werden sowohl die beleimten Buchblocks 100 als auch die beleimten Umschläge 101 einer Andrückstation 8 zugeführt. Zwischen der Vorrichtung 1 zur Kontrolle der Klebstoffschichtdicke auf einem Umschlag 101 und der Andrückstation 8 kann sich eine nicht dargestellte Umschlagausschleusweiche befinden. Hierüber können fehlerhaft beleimte Umschläge ausgeschleust werden.

In der Andrückstation 8 werden zunächst in einem Arbeitstakt 8a der beklebte Buchblock 100 und der mit Klebstoff versehene Umschlag 101 relativ zueinander positioniert und miteinander verbunden. Anschließend erfolgt in einem weiteren Arbeitstakt 8b die Formung des Rückens in der Andrückstation 8. Die fertigen Bücher 102 werden am Ende des Klebebinders 1000 in Transportrichtung T₂ in einer Auslagestation 9 ausgelegt.

Die erfindungsgemäße Vorrichtung kann nicht nur zur Kontrolle und Regelung einer auf ein Produkt aufzubringenden Klebstoffschicht verwendet werden, sondern darüberhinaus auch zur Kontrolle der Buchblocks und Umschläge auf fehlerhafte Rillungen oder Fräsungen. Als fehlerhaft erkannte Produkte können dann ausgeschleust werden.

### Bezugszeichenliste

- 1: Vorrichtung zur Kontrolle der Klebstoffschichtdicke
- 2: Rückenbearbeitungsstation 1
- 3: Rückenbearbeitungsstation 2
- 4: Klebstoffauftragsstation Buchblockrücken
- 5: Warmhaltestrecke
- 6: Klebstoffauftragssystem Umschlag
- 7: Umschlagzuführung
- 8: Andrückstation
- 8a: Arbeitstakt
- 8b: Arbeitstakt
- 9: Auslagestation

- 10: Kamera mit Obj ektiv
- 11: Beleuchtungseinheit
- 12: Anzeigeeinheit
- 13: Auswerteeinrichtung
- 15: Datenleitung
- 16: Datenleitung

- 100: Buchblock
- 101: Umschlag
- 102: Buch

- 1000: Klebebinder

- T: Transportrichtung
- T₁: Transportrichtung
- T₂: Transportrichtung

- d: Klebstoffschichtdicke

## Patentansprüche

1. Verfahren zur Kontrolle eines Buchblocks, eines Buchdeckels oder eines Umschlags über seine gesamten Oberfläche, insbesondere in Buchbindemaschinen, mittels Triangulation,
**gekennzeichnet durch** nachfolgende Schritte:
a) Transport des Produktes zu einer Vorrichtung zur Kontrolle der Oberfläche
b) Aussenden eines Lichtstrahls **durch** eine Beleuchtungseinheit
c) Betrachtung des Strahls auf der Oberfläche **durch** eine Hochgeschwindigkeitskamera und Winkelvermessung mit trigonometrischer Berechnung
d) inkrementeller Weitertransport des Produktes
e) Wiederholen der Schritte b), c) und d) bis die gesamte Oberfläche des Produktes vermessen ist
f) Drehung des Produktes zur Kontrolle der gegenüberliegenden Oberfläche und wiederholen der Schritte b) bis e)
g) Zusammensetzung der Messergebnisse der Einzelmessungen zu einem 3D-Lichtschnittprofil mit nachfolgender Auswertung mit einer Auswerteeinrichtung

2. Verfahren nach Anspruch 1 mit einem zusätzlichen Schritt
h) Ausschleusen oder Markieren des Produktes, wenn das 3D-Lichtschnittprofil nicht den in der Auswerteeinheit hinterlegten Vorgaben entspricht.
